# EUROPÄISCHE PATENTSCHRIFT

(11) **EP 0 781 611 B1**
(45) Veröffentlichungstag und Bekanntmachung des Hinweises auf die Patenterteilung: **23.12.1998**
(21) Anmeldenummer: 96118326.6
(22) Anmeldetag: 15.11.1996
(51) Int. Cl.: B21F 1/00

(54) **Verfahren zur Herstellung von Bauteilen aus Stabmaterial, insbesondere von Kfz-Fahrwerk-Stabilisatoren**
Process for the production of components from bar material, in particular stabiliser bars for motor vehicles
Procédé pour la fabrication d'éléments en matériau en barre, en particulier barres stabilisatrices de véhicules automobiles

(30) Priorität: 30.12.1995 DE 19549218
(43) Veröffentlichungstag der Anmeldung: 02.07.1997
(73) Patentinhaber: Fried. Krupp AG Hoesch-Krupp, 45143 Essen (DE)
(72) Erfinder: Krause, Erwin, 58809 Neuenrade (DE)
(74) Vertreter: Cohausz & Florack

(56) Entgegenhaltungen:
- EP-A- 0 476 227
- US-A- 4 854 150

## Beschreibung

Die Erfindung betrifft ein Verfahren zur Herstellung von mit mindestens einem geprägten und gelochten Endabschnitt versehenen Bauteilen, insbesondere von Kfz-Fahrwerk-Stabilisatoren, aus Stabmaterial, bei dem die Arbeitschritte des Prägens und Lochens der Endabschnitte, des Erwärmens und des Fertigbiegens des Stabmaterials durchlaufen werden.

Bei der herkömmlichen Herstellung von Bauteilen der voranstehend genannten Art (siehe z.B. US-A-4 854 150) werden zunächst die zu prägenden und zu lochenden Endabschnitte der bis dahin unverformten Stäbe erwärmt, um anschließend die Prägung und Lochung vorzunehmen. Nach Abschluß dieses Arbeitsgangs wird der betreffende Stab vollständig erwärmt, anschließend gebogen und einer Endvergütung zugeführt. Der Vorteil eines solchen Vorgehens liegt darin, daß das Prägen und Lochen der Endabschnitte auf einfache Weise durchgeführt werden kann. Nachteilig an der bekannten Vorgehensweise ist jedoch, daß für die Verformung und Lochung der Endabschnitte eine dem eigentlichen Biegevorgang vorgeschaltete Erwärmung der Endabschnitte erforderlich ist. Zusätzlich wird dadurch, daß die Prägung und Lochung der Endabschnitte vor dem eigentlichen Biegevorgang vorgenommen wird, ein genaues Einhalten der Lage der vorbearbeiteten Endabschnitte während aller darauffolgender Arbeitsschritte notwendig.

Diese Notwendigkeit der genauen, konstanten Positionierung der betreffenden Abschnitte macht es schwierig, eine Biegevorrichtung automatisch mit entsprechend vorbearbeitetem Stabmaterial zu beschicken. Dabei ist es für jeden der einzelnen Biegeschritte erforderlich, die Endabschnitte zu positionieren. Zudem hat sich in der Praxis gezeigt, daß es beim Biegen der Stab-Bauteile oftmals nicht möglich ist, die Position der vorbearbeiteten Endabschnitte beizubehalten. In solchen Fällen ist es dann notwendig, die Endabschnitte nachzubearbeiten, um bestimmte Toleranzvorgaben erfüllen zu können.

Um die voranstehend erwähnten Nachteile des bekannten Herstellungsverfahrens zu minimieren, ist ein erheblicher Konstruktions- und Fertigungsaufwand für die Biegewerkzeuge erforderlich. Gleichzeitig bringen diese Nachteile längere Fertigungszeiten mit sich. Darüber hinaus wird durch die aufwendigen Positioniervorgänge und die aufgrund der Notwendigkeit einer exakten Biegeführung komplex gestalteten Biegewerkzeuge eine automatisierte Fertigung der Bauteile aus Stabmaterial erschwert.

Die Aufgabe der Erfindung besteht darin, ein Verfahren zu schaffen, mit dem sich auf kostengünstige Weise Bauteile aus Stabmaterial bei geringem Fertigungsaufwand und reduzierten Fertigungszeiten herstellen lassen.

Diese Aufgabe wird erfindungsgemäß durch ein Verfahren der eingangs genannten Art gelöst, bei dem die Bearbeitung des Stabmaterials in der folgenden Arbeitsschrittfolge erfolgt:
a) Erwärmen des Stabmaterials,
b) Biegen mindestens des mit der Prägung und der Lochung zu versehenden Endabschnitts,
c) Prägen des gebogenen Endabschnitts,
d) Lochen des gebogenen Endabschnitts,
e) Fertigbiegen des Stabmaterials.

Gemäß der Erfindung wird das Prägen und Lochen der entsprechend zu bearbeitenden Endabschnitte nicht vor der Biegeverformung des Stabmaterials vorgenommen, sondern dieser Verformungsvorgang wird als Zwischenschritt zwischen den einzelnen Biegeschritten ausgeführt. Dies hat den Vorteil, daß die Verformung der Endabschnitte mit einer handelsüblichen Umformpresse durchgeführt werden kann.

Darüber hinaus ist durch den ersten Biegevorgang die Lage des zu fertigenden Bauteils definiert. Somit können die an den Endabschnitten durchgeführten Verformungsvorgänge stets lagegerecht durchgeführt werden, ohne daß dazu eine gesonderte, exakte Positionierung der Bauteile erforderlich ist. Ein weiterer Vorteil besteht in diesem Zusammenhang darin, daß es mit dem erfindungsgemäßen Verfahren möglich ist, die gebogenen Endabschnitte während der Durchführung des Lochens des geprägten Endabschnitts in derselben Stellung zu halten, wie während des Prägens dieses Abschnitts. Ein Umrichten des Werkstücks innerhalb der zu diesem Zweck eingesetzten Vorrichtung ist nicht erforderlich.

Da das Stabmaterial, aus welchem die Bauteile gefertigt werden, gemäß dem erfindungsgemäßen Verfahren nicht in einer vorbestimmten Lage in die Biegevorrichtung eingeführt werden muß, können die Stabrohlinge problemlos magaziniert und automatisch in die Biegevorrichtung eingelegt werden.

Sowohl die Möglichkeit des automatischen Beschickens der zur Durchführung des Verfahrens eingesetzten Vorrichtung als auch die Tatsache, daß es bei Durchführung des erfindungsgemäßen Verfahrens nicht mehr erforderlich ist, aufwendige Positionierungen der bearbeiteten Bauteile vorzunehmen, führt dazu, daß sich mit dem erfindungsgemäßen Verfahren bei reduziertem Werkzeugkostenaufwand und verkürzter Fertigungszeit Bauteile aus Stabmaterial kostengünstig herstellen lassen, die alle hinsichtlich der Toleranz und Güte an sie gestellten Anforderungen erfüllen.

Für den Fall, daß an den Bauteilen aus Stabmaterial mindestens zwei Endabschnitte geprägt und gelocht werden sollen, ist es günstig, wenn bei dem ersten Biegen mindestens die in einer Ebene angeordneten Endabschnitte gleichzeitig gebogen werden. Durch diese Maßnahme ist auf einfache Weise gewährleistet, daß die jeweiligen Bauteile während der auf den ersten Biegeschritt folgenden Bearbeitungsschritte die durch ihre Form bestimmte Lage beibehalten.

Nachfolgend wird die Erfindung anhand einer ein Ausführungsbeispiel darstellenden Zeichnung näher erläutert. Es zeigen:
- Fig. 1: eine Einrichtung zur automatischen Herstellung von Kfz-Fahrwerk-Stabilisatoren in Draufsicht;
- Fig. 2 bis 5: die einzelnen Verformungsschritte des Stabmaterials bei der Herstellung eines Kfz-Fahrwerk-Stabilisators in einer Einrichtung nach Figur 1 in schematischer Ansicht.

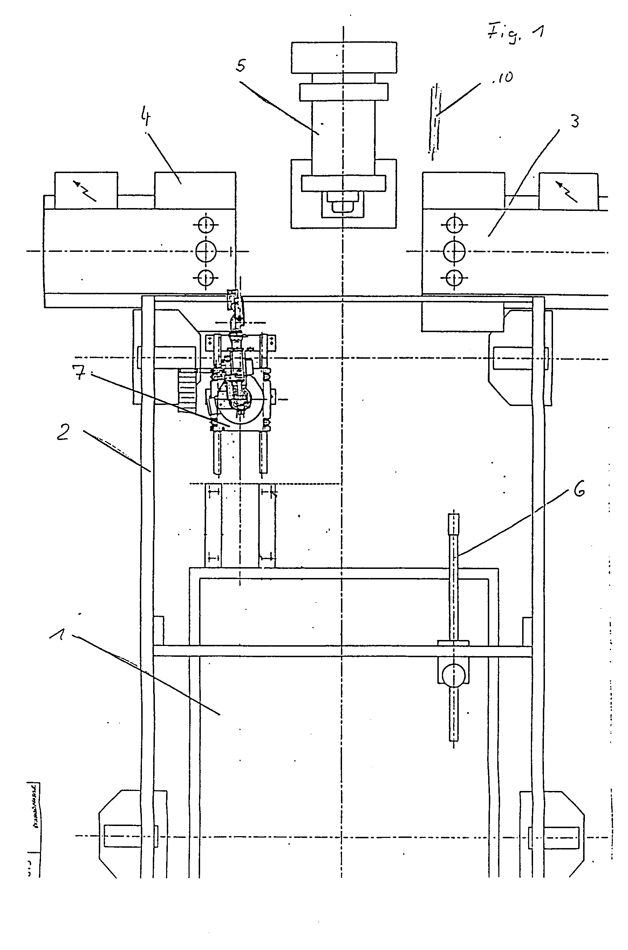

Die in Fig. 1 gezeigte Einrichtung zur Herstellung von Kfz-Fahrwerks-Stabilisatoren besteht aus zwei Stab-Biegepressen 3 und 4 sowie einer zwischen beiden v. g. Pressen angeordneten Augenformpresse 5. Zum Beschicken der in Fig. 1 gezeigten Einrichtung ist eine automatische Beschickungsvorrichtung 6 bestimmt, die vorzugsweise auf einem Portal 2 angeordnet ist.

Zur Herstellung von Kfz-Fahrwerk-Stabilisatoren wird Stabmaterial 10, das aus einem nicht gezeigten automatischen Magazin entnommen wird, in einer ebenfalls nicht gezeigten entsprechenden Vorrichtung erwärmt. Das erwärmte Stabmaterial 10 wird anschließend über nicht gezeigte automatische Fördereinrichtungen in das Werkzeug der ersten Presse 3 gefördert.

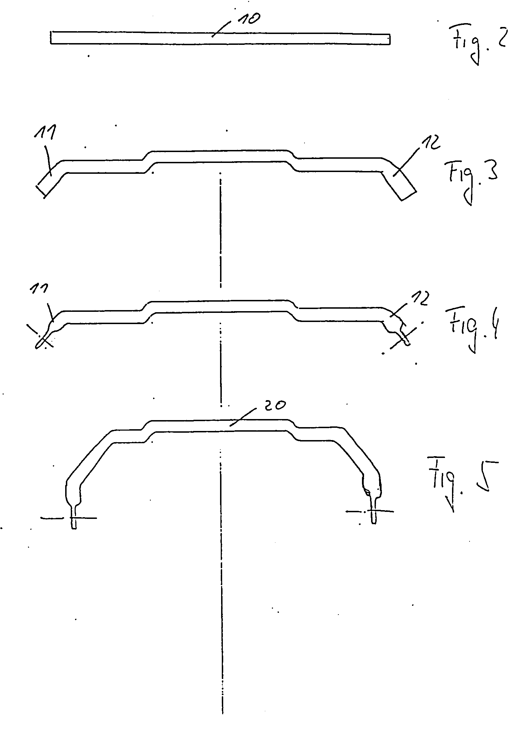

In der Presse 3 werden in einem ersten Biegeschritt (Fig. 3) beide Endabschnitte 11, 12 des Stabmaterials in die in Figur 3 gezeigte oder ähnliche Form gebracht. Anschließend wird das Stabmaterial 10 mittels der automatischen Beschickungsvorrichtung 6 in ein nicht gezeigtes, im Arbeitsbereich der Exzenterpresse 5 angeordnetes, Werkzeug eingelegt, in der zunächst der erste Endabschnitt 11 des Stabmaterials 10 eingespannt wird. Danach erfolgt mittels der Presse 5 das Prägen des ersten Endabschnitts 11.

Nach Abschluß des Prägevorgangs wird dann wiederum unter Benutzung der Exzenterpresse 5 sofern erforderlich der Endabschnitt gelocht. Der Endabschnitt 11 behält dabei die zuvor für den Prägevorgang eingestellte Position unverändert bei (Fig. 4). Nach Durchführung des Lochens des ersten Endabschnitts 11 wird das Stabmaterial 10 mittels der automatischen Beschickungsvorrichtung 6 derart in das Werkzeug eingelegt, daß nun der zweite Endabschnitt 12 dem nacheinander durchgeführten Präge- und Lochvorgang unterzogen werden kann.

Nach Abschluß des Prägens und Lochens des zweiten Endabschnitts 12 wird das Stabmaterial 10 mittels der automatischen Bestückungsvorrichtung 6 in die zweite Presse 4 eingelegt, in der es in ein oder zwei weiteren Biegeschritten in seine Endform gebracht wird (Fig. 5). Ein auf diese Weise gefertigter Kfz-Fahrwerk-Stabilisator 20 wird nun mittels einer automatischen Entnahmevorrichtung 7 einem Härtebad 1 zur Vergütung zugeführt werden.

## Patentansprüche

1. Verfahren zur Herstellung von mit mindestens einem geprägten und gelochten Endabschnitt (11,12) versehenen Bauteilen, insbesondere von Kfz-Fahrwerk-Stabilisatoren (20), aus Stabmaterial (10), bei dem die Arbeitschritte des Prägens und Lochens der Endabschnitte, des Erwärmens und des Fertigbiegens des Stabmaterials durchlaufen werden, **dadurch gekennzeichnet**, **daß** die Bearbeitung des Stabmaterials in der folgenden Arbeitsschrittfolge erfolgt:
a) Erwärmen des Stabmaterials (10),
b) Biegen mindestens des mit der Prägung und der Lochung zu versehenden Endabschnitts (11,12),
c) Prägen des gebogenen Endabschnitts (11,12),
d) Lochen des gebogenen Endabschnitts (11,12),
e) Fertigbiegen des Stabmaterials (10).

2. Verfahren nach Anspruch 1, **dadurch gekennzeichnet**, **daß** beim Arbeitsschritt b) mindestens die in einer Ebene angeordneten Endabschnitte (11,12) gleichzeitig gebogen werden.

3. Verfahren nach einem der Ansprüche 1 oder 2, **dadurch gekennzeichnet**, **daß** der gebogene Endabschnitt (11,12) während der Durchführung des Arbeitsschritts c) in der selben Stellung gehalten ist wie während der Durchführung des Arbeitsschritts d).

## Claims

1. A method for producing structural members, more particularly motor vehicle chassis stabilisers (20), provided with at least one embossed and perforated end portion (11, 12) made from rod material (10), wherein the operational steps are performed of the embossing and perforation of the end portions and the heating and final bending of the rod material, characterised in that the rod material is processed in the following sequence of operational steps:
a) heating the rod material (10),
b) bending at least the end portion (11, 12) to be provided with the embossing and the perforation,
c) embossing of the bent end portion (11, 12),
d) perforating the bent end portion (11, 12),
e) final bending of the rod material.

2. A method according to claim 1, characterised in that in that in operational step b) at least the end portions (11, 12) disposed in one plane are bent simultaneously.

3. A method according to one of claims 1 or 2, characterised in that during the performance of the operational step c) the bent end portion (11, 12) is retained in the same position as during the performance of the operational step d).

## Revendications

1. Procédé de fabrication de composants pourvus d'au moins une section terminale (11, 12) estampée et poinçonnée, en particulier des stabilisateurs (20) de châssis automobiles, à partir de barres brutes (10), procédé au cours duquel on effectue les étapes de l'estampage et du poinçonnage des sections terminales, du chauffage et du cintrage final de la barre, caractérisé en ce que le travail de la barre s'effectue dans l'ordre suivant des étapes d'opérations:
a) chauffage de la barre brute (10),
b) cintrage d'au moins la section terminale (11, 12) à pourvoir de l'estampage et du poinçonnage,
c) estampage de la section terminale cintrée (11, 12),
d) poinçonnage de la section terminale cintrée (11, 12),
e) finition du cintrage de la barre (10).

2. Procédé selon la revendication 1, caractérisé en ce qu'au cours de l'étape b) des opérations, au moins les sections terminales (11, 12) situées dans un même plan sont cintrées simultanément.

3. Procédé selon l'une des revendications 1 ou 2, caractérisé en ce que, pendant l'exécution de l'étape c) des opérations, la section terminale cintrée (11, 12) est maintenue dans la même position que pendant l'exécution de l'étape d) des opérations.
